# DEMANDE DE BREVET EUROPEEN

(11) **EP 1 571 749 A1**
(43) Date de publication de la demande: **07.09.2005**
(21) Numéro de dépôt: 04005345.6
(22) Date de dépôt: 05.03.2004
(51) Int. Cl.: H02K 1/14, H02K 37/16

(54) **Moteur biphasé symétrique avec un rotor à aimant permanent bipolaire**

(71) Demandeur: Microcomponents SA, 2540 Grenchen (CH)
(72) Inventeur: Taghezout, Daho, 1110 Morges (CH)
(74) Mandataire: Surmely, Gérard

(57) **Abrégé**

Le moteur biphasé de petites dimensions est formé par un stator comportant trois pôles magnétiques principaux (8, 10, 12) agencés dans un même plan général et par un rotor muni d'un aimant permanent bipolaire (6). Les premier et deuxième pôles principaux sont respectivement reliés au troisième pôle principal par deux noyaux magnétiques portant chacun une des deux bobines (20, 22). Le troisième pôle principal (12) définit deux pôles secondaires adjacents (26, 28), séparés l'un de l'autre par une zone à haute réluctance magnétique (30). Les premier et deuxième pôles principaux (8, 10) et les deux pôles secondaires (26, 28) sont répartis dans quatre secteurs circulaires d'environ 90° autour de l'ouverture statorique (40).

## Description

La présente invention concerne un moteur de petites dimensions prévu notamment pour l'entraînement des aiguilles d'un dispositif d'affichage analogique. Plus particulièrement, l'invention concerne un moteur du type biphasé ayant un rotor muni d'un aimant permanent bipolaire agencé dans une ouverture du stator et ayant une polarisation magnétique radiale relativement à l'axe de rotation du rotor. A titre d'exemple, le moteur selon l'invention peut être utilisé dans un dispositif d'entraînement d'aiguilles indiquant la valeur d'une grandeur physique mesurée, notamment le temps dans le domaine horloger, la vitesse ou la fréquence. En particulier, le moteur de la présente invention peut avantageusement être utilisé pour l'entraînement de l'aiguille d'un compteur agencé dans un tableau de bord d'une voiture.

L'homme du métier connaît plusieurs moteurs biphasés de petites dimensions utilisés pour l'entraînement d'affichage analogique. En particulier, il connaît un tel moteur dont le stator présente trois pôles magnétiques répartis respectivement dans trois secteurs circulaires de 120° autour de l'ouverture statorique. Un des trois pôles est commun aux deux circuits magnétiques principaux de ce moteur. Un tel moteur peut être de construction relativement peu onéreuse et présenter une structure statorique plane avantageuse pour une intégration dans des dispositifs de faible épaisseur, en particulier dans un mouvement de montre. Cependant un tel moteur présente le désavantage de ne pas être magnétiquement symétrique, c'est-à-dire avec des flux couplés entre l'aimant du rotor et chacune des deux bobines qui soient en quadrature de phase (déphasage de 90° environ). En effet, un tel moteur biphasé présente au niveau des pôles magnétiques du stator une structure propre à un moteur triphasé avec un déphasage d'environ 120° entre les flux couplés aimant-bobine. Dans le cadre d'un tel moteur biphasé, la non-symétrie des flux couplés engendre un couple pulsant élevé, ce qui limite le couple utile du moteur en régime dynamique, augmente la consommation électrique, et engendre des vibrations du moteur

L'homme du métier connaît aussi des moteurs biphasés symétriques présentant quatre pôles magnétiques couplés deux à deux à une bobine. Les deux circuits magnétiques du moteur sont prévus indépendants l'un de l'autre, c'est-à-dire isolés magnétiquement. L'usinage et l'assemblage de tels moteurs sont généralement plus onéreux que pour le moteur biphasé à trois pôles magnétiques précédemment décrit. De plus, l'isolation magnétique des deux circuits magnétiques du stator qui se croisent nécessite généralement une construction avec un stator présentant une épaisseur ou hauteur supérieure; ceci en particulier pour permettre l'agencement d'un entrefer dans la région de superposition des deux circuits magnétiques.

Le but de la présente invention est de proposer un moteur biphasé du type symétrique et présentant une structure statorique plane, un faible encombrement et un rendement élevé, avec un coût de fabrication réduit.

A cet effet la présente invention a pour objet un moteur biphasé de petites dimensions formé d'un stator portant deux bobines d'alimentation et d'un rotor muni d'un aimant permanent bipolaire, le stator définissant des premier, deuxième et troisième pôles magnétiques principaux qui définissent ensemble une ouverture statorique dans laquelle est logé l'aimant bipolaire du rotor. Les premier et deuxième pôles principaux sont reliés respectivement au troisième pôle principal par deux noyaux magnétiques portant chacun une des deux bobines. Ce moteur est caractérisé en ce que le troisième pôle magnétique principal définit deux pôles secondaires adjacents, séparés par une zone à haute réluctance magnétique dans la région périphérique à l'ouverture statorique. Les premier et deuxième pôles principaux et lesdits deux pôles secondaires sont répartis dans quatre secteurs circulaires d'environ 90° autour de l'ouverture statorique. Selon une caractéristique particulière de l'invention, la zone à haute réluctance magnétique séparant les deux pôles secondaires est définie par une fente non traversante et débouchant dans cette ouverture statorique. Cette fente pénètre ainsi dans le troisième pôle principal sans opérer une division en deux de ce dernier. La fente est donc borgne.

De préférence, le stator est constitué par un alliage fer-silicium.

La présente invention sera exposée de manière plus détaillée à l'aide de la description suivante, faite en référence au dessin annexé, donné à titre d'exemple nullement limitatif, dans lequel :

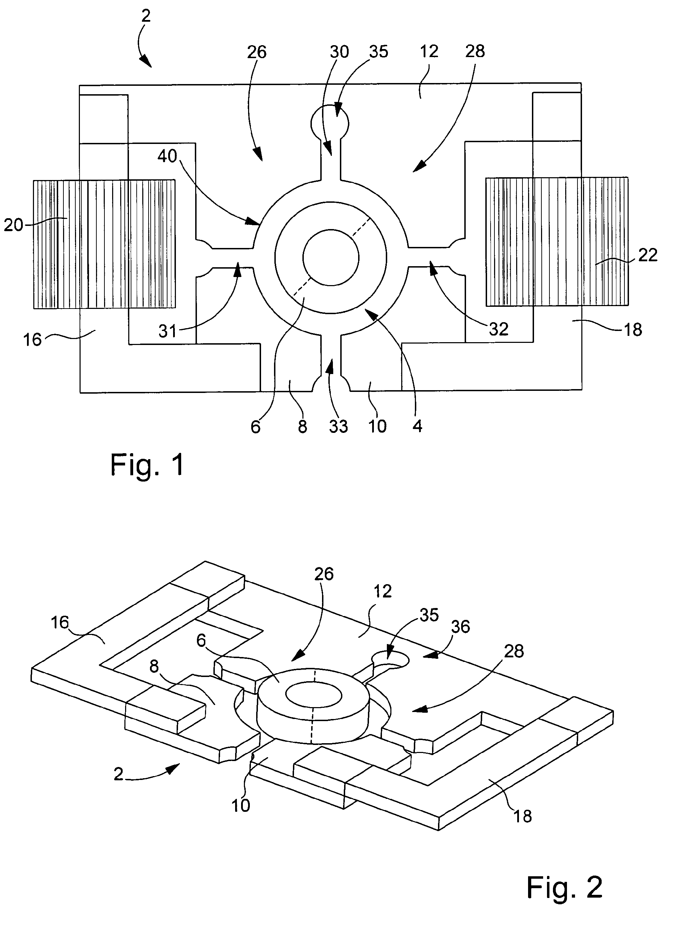

- la figure 1 est une vue en perspective du stator et de l'aimant permanent du rotor d'une première variante d'un mode de réalisation du moteur selon l'invention;
- la figure 2 est une vue de dessus du moteur de la figure 1;
- la figure 3 représente graphiquement le flux couplé aimant-bobine pour chacune des deux bobines du premier mode de réalisation en fonction de la position angulaire du rotor, et
- la figure 4 est une vue de dessus d'une deuxième variante de réalisation du moteur selon l'invention.

Le moteur selon la première variante de réalisation comporte un stator 2 et un rotor 4 muni d'un aimant permanent bipolaire 6 de forme annulaire et d'aimantation radiale. Le stator 2 est formé par trois pôles magnétiques principaux 8, 10 et 12. Les premier et deuxième pôles principaux 8 et 10 sont respectivement reliés au troisième pôle principal 12 par deux noyaux magnétiques 16 et 18 présentant la forme générale d'un L. Les trois pôles magnétiques principaux définissent une ouverture statorique 40 dans laquelle est logé l'aimant permanent 6. Les noyaux 16 et 18 portent respectivement deux bobines d'alimentation 20 et 22. Le troisième pôle principal définit deux pôles magnétiques secondaires 26 et 28, ces deux pôles secondaires étant adjacents et définissant partiellement l'ouverture statorique 40. Les deux pôles secondaires 26 et 28 sont séparés par une zone à haute réluctance 30 définissant un entrefer entre les deux pôles secondaires dans la région périphérique de l'ouverture statorique. On notera que l'entrefer 30 est formé par une fente borgne débouchant dans l'ouverture 40. La fente 30 est donc non traversante et dimensionnée de sorte que les deux pôles magnétiques secondaires 26 et 28 sont reliés magnétiquement par la partie externe 36 du pôle 12. Cette partie externe est caractérisée par une haute perméance magnétique.

Ce qui est remarquable dans l'agencement du moteur selon l'invention, c'est d'obtenir un moteur biphasé symétrique avec des circuits magnétiques principaux non isolés magnétiquement l'un de l'autre. Ce résultat découle de l'agencement des deux pôles principaux 8 et 10 et des deux pôles secondaires 26 et 28, et du fait que l'aimant permanent est bipolaire. En effet, selon l'invention, les premier et deuxième pôles principaux 8 et 10 et les deux pôles secondaires 26 et 28 sont répartis dans quatre secteurs circulaires d'environ 90° autour de l'ouverture statorique, c'est-à-dire relativement à l'axe géométrique de rotation du rotor 4. Ainsi chacun de ces quatre pôles présente un épanouissement polaire définissant environ un quart de l'ouverture circulaire 40. Les pôles secondaires 26 et 28 sont séparés des deux pôles principaux 8 et 10 respectivement par deux entrefers 31 et 32. Les deux pôles principaux 8 et 10 sont séparés par un entrefer 33. On notera que les entrefers 31, 32 et 33 présentent dans leur partie externe des encoches servant à l'assemblage et au positionnement des pièces statoriques. De même, la fente 30 est terminée par un trou circulaire 35 prévu pour le passage d'une goupille de positionnement du stator agencée dans un logement destiné à recevoir le moteur selon l'invention.

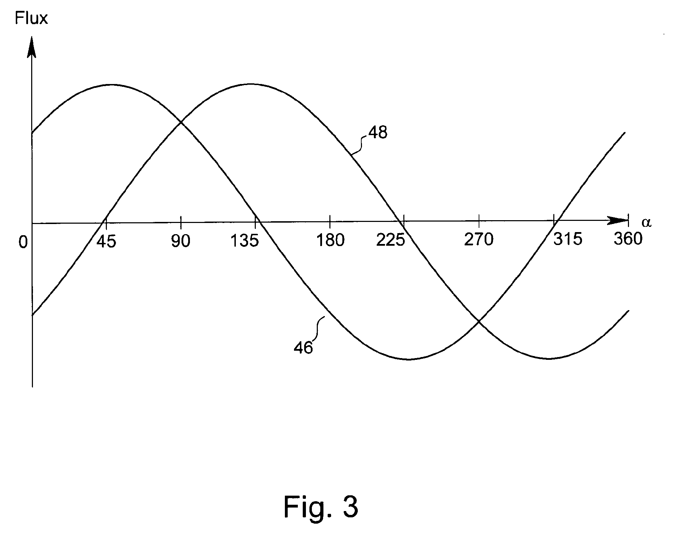

A la figure 3 est représenté le flux couplé aimant-bobine pour chacune des deux bobines 20 et 22. Les deux courbes 46 et 48 obtenues par simulation respectivement pour les deux bobines 20 et 22 présentent un déphasage d'environ 90°. Ainsi, la structure des pôles statoriques et l'utilisation d'un aimant bipolaire à aimantation radiale donnent au moteur de l'invention un comportement quasi symétrique.

On notera que le stator est réalisé de préférence en Fe-Si dans le mode de réalisation décrit. Toutefois, dans un autre mode de réalisation, on peut prévoir un alliage Fe-Ni permettant de remplacer les fentes 31, 32 et 33 par des isthmes à haute réluctance magnétique sans que cela n'influence trop le rendement du moteur. Cette dernière réalisation a l'avantage de relier matériellement les pôles statoriques et ainsi de garantir une meilleure circularité pour l'ouverture 40.

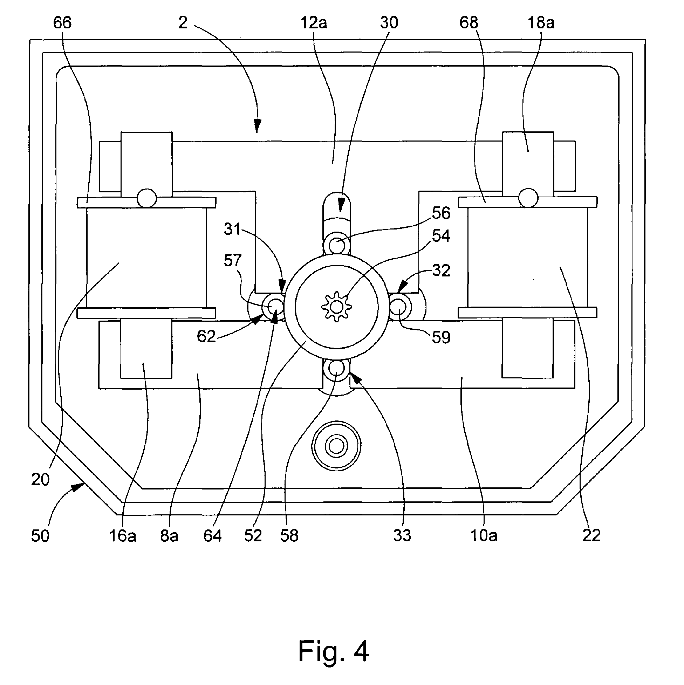

La figure 4 représente schématiquement une deuxième variante de réalisation de l'invention. Cette deuxième variante se distingue en particulier par le fait que les diverses pièces statoriques présentent des formes simples, faciles à usiner ou à former.

Les pôles principaux 8A et 10A du stator 2 ont une forme générale rectangulaire, avec un évidement dans un angle, ayant un profil circulaire concave, pour définir l'ouverture dans laquelle est agencé le rotor. Le rotor est monté dans une cage 52 présentant un trou pour le passage de son arbre, cet arbre portant à l'extérieur de la cage un pignon d'engrenage 54.

Le troisième pôle principal 12A se distingue de la première variante par le fait que la fente 30 présente une largeur constante correspondant au diamètre d'un plot 56 de positionnement de ce troisième pôle 12A. Le moteur est agencé sur du support 50 présentant quatre plots de positionnement 56, 57, 58 et 59. Ces plots présentent une base 62 ayant un premier diamètre et une partie supérieure 64 ayant un deuxième diamètre inférieur au premier diamètre. La base 62 sert au positionnement des pièces statoriques, alors que la partie supérieure 64 sert au centrage de la cage 52 du rotor.

Les noyaux 16A et 18A ont une forme rectangulaire. On remarquera qu'ils peuvent être assemblés aux pôles statoriques par vis, par soudage laser, par collage ou être simplement maintenus en place par des parties d'un boîtier agencé pour recevoir le moteur de l'invention. Un tel boîtier est par exemple formé du support 50 et d'un couvercle (non représenté).

On remarquera que le boîtier du moteur peut comprendre d'autres plots ou autres moyens de positionnement des diverses parties de ce moteur.

Finalement, on notera que, dans la deuxième variante, les bobines 20 et 22 sont enroulées sur des supports respectifs 66 et 68. Ces supports peuvent notamment servir à l'agencement de contacts électriques pour l'alimentation des bobines.

## Revendications

1. Moteur biphasé de petites dimensions formé d'un stator (2) portant deux bobines d'alimentation (20, 22) et d'un rotor (4) muni d'un aimant permanent bipolaire (6), ledit stator définissant un premier pôle magnétique principal (8), un deuxième pôle magnétique principal (10) et troisième pôle magnétique principal (12) qui définissent ensemble une ouverture statorique (40) dans laquelle est logé ledit aimant bipolaire, lesdits premier et deuxième pôles principaux étant respectivement reliés au troisième pôle principal par deux noyaux magnétiques (16, 18) portant chacun une des deux bobines, **caractérisé en ce que** ledit troisième pôle principal (12) définit deux pôles secondaires adjacents (26, 28), séparés dans la région périphérique à ladite ouverture statorique par une zone à haute réluctance magnétique (30) et reliés l'un à l'autre par une partie statorique (36) à haute perméance magnétique, lesdits premier et deuxième pôles principaux et lesdits deux pôles secondaires étant répartis dans quatre secteurs circulaires d'environ 90° autour de ladite ouverture statorique.

2. Moteur biphasé selon la revendication 1, **caractérisé en ce que** ladite zone à haute réluctance magnétique (30) séparant les deux pôles secondaires (26, 28) est définie par une fente borgne débouchant dans ladite ouverture statorique.

3. Moteur biphasé selon la revendication 1 ou 2, **caractérisé en ce que** lesdits trois pôles magnétiques principaux sont formés par trois parties planes qui s'étendent dans un même plan général.

4. Moteur biphasé selon l'une des revendications précédentes, **caractérisé en ce que** ledit stator est constitué par un alliage fer-silicium.

5. Dispositif indicateur de la valeur d'une grandeur physique mesurée dans un véhicule automobile en mouvement, ce dispositif ayant un affichage analogique et étant **caractérisé en ce qu'**il comprend un moteur selon l'une des revendications précédentes pour l'entraînement dudit affichage analogique.
